# EUROPEAN PATENT SPECIFICATION

(11) **EP 2 436 927 B1**
(45) Date of publication and mention of the grant of the patent: **07.08.2013**
(21) Application number: 10845525.4
(22) Date of filing: 11.06.2010
(51) Int. Cl.: F04B 53/10, F04B 15/02, E04G 21/02, B65G 53/46, F04B 7/00

(54) **DISTRIBUTING VALVE FOR CONCRETE PUMP, CONCRETE PUMP AND CONTROL METHOD THEREOF AND CONCRETE PUMP VEHICLE**
VERTEILUNGSVENTIL FÜR EINE BETONPUMPE, BETONPUMPE UND STEUERVERFAHREN DAFÜR UND BETONPUMPENFAHRZEUG
SOUPAPE D'ALIMENTATION POUR POMPE À BÉTON, POMPE À BÉTON, PROCÉDÉ DE COMMANDE ASSOCIÉ ET VÉHICULE POMPE À BÉTON

(30) Priority: 09.02.2010 CN 201010114510
(43) Date of publication of application: 04.04.2012
(73) Proprietor: Hunan Sany Intelligent Control Equipment Co., Ltd, Hunan 410100 (CN); Sany Heavy Industry Co., Ltd., Changsha Hunan 410100 (CN)
(72) Inventor: YI, Xiuming, Hunan 410100 (CN); ZHANG, Chunguang, Hunan 410100 (CN); LIU, Guifeng, Hunan 410100 (CN)
(74) Representative: Maiwald Patentanwalts GmbH
(86) International application number: PCT/CN2010/073795
(87) International publication number: WO 2011/097853

(56) References cited:
- WO-A1-99/09315
- WO-A2-2009/003784
- WO-A2-2009/003784
- WO-A2-2009/003785
- WO-A2-2009/003785
- CN-A- 101 718 265
- CN-C- 1 198 055
- CN-C- 1 256 511
- CN-Y- 2 242 982
- CN-Y- 2 421 085
- CN-Y- 2 598 949
- CN-Y- 2 627 243
- CN-Y- 201 354 515
- DE-A1- 4 015 674
- DE-B1- 2 415 276
- DE-U1- 8 017 445
- JP-A- 2003 343 429
- US-A- 3 298 322

## Description

This application claims the priority of Chinese Patent Application No.201010114510.3, entitled "DISTRIBUTING VALVE FOR CONCRETE PUMP, CONCRETE PUMP AND CONTROL METHOD THEREOF AND CONCRETE PUMP VEHICLE" filed on February 9, 2010 with State Intellectual Property Office of PRC.

### FIELD OF THE PRESENT INVENTION

The present invention relates to a concrete pump technique, in particular to a distributing valve for concrete pump and to a concrete pump with this distributing valve and a control method thereof and a concrete pump vehicle.

### BACKGROUND OF THE INVENTION

A concrete pump is one of concrete machinery having a wide application presently. The concrete pump generally includes a hopper, a delivery cylinder, a distributing valve and a delivery pipe. The hopper is adapted to store concrete slurry. The delivery cylinder makes reciprocating movements under driving of a hydraulic cylinder. The distributing valve is used to communicate the delivery cylinder with the hopper at a first predetermined time so that the delivery cylinder sucks material, specifically an appropriate amount of concrete slurry; and to communicate the delivery cylinder with the delivery pipe at a second predetermined time so that the delivery cylinder pumps material, specifically pushes the sucked concrete slurry into the delivery pipe and conveys the sucked concrete slurry to a predetermined position under pressure of the delivery cylinder.

Presently, in domestic and foreign markets, there are mainly two kinds of distributing valves for concrete pump, which are a gate-type distributing valve and an S-type distributing valve.

The gate-type distributing valve communicates a delivery cylinder with an outlet of a hopper at a first predetermined time by means of the up-down movement of two gates in the distributing valve so that the delivery cylinder sucks material; and communicates the delivery cylinder with a delivery pipe at a second predetermined time via a Y-type pipe so that the delivery cylinder pumps material. The gate-type distributing valve has some advantages. For example, since the self-flowing performance of concrete slurry may be fully utilized due to the outlet located at the bottom of the hopper, the delivery cylinder may more effectively suck the concrete slurry, and thus the concrete pump has a better sucking performance. Besides, since, only stirring vanes are provided in the hopper, the hopper has a relatively high volumetric efficiency, thus improving the pumping efficiency of the concrete pump. In particular to coarse aggregate concrete, the above-mentioned advantages are more significant. However, there are disadvantages in the gate-type distributing valve. For example, since the communicating state between the delivery cylinder and the delivery pipe is realized by switching the gate positions, the pressure of the concrete slurry in the delivery pipe is limited by the fit situation of the periphery of the gate when the delivery cylinder pumps material. Considering the requirement of switching the gate positions and the operation conditions in delivering concrete slurry, the gate-type distributing valve cannot withstand a relatively large operating pressure (in general, about 8Mpa) due to the fit situation of the periphery of the gate. Thus the gate-type distributing valve can not meet the requirement of pumping concrete slurry at a high pressure, and can not pump concrete slurry to a higher predetermined position; thereby disadvantageously affecting the pumping efficiency of the concrete pump and limiting the applications of the concrete pump.

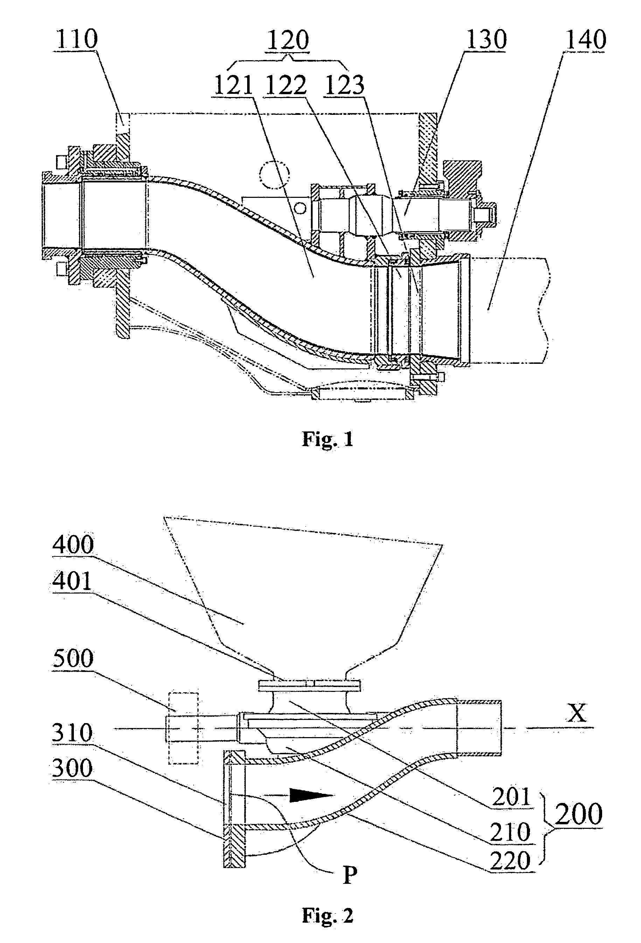

Referring to Fig. 1, a structural view of an S-type distributing valve in the prior art is shown. In Fig. 1, a hopper 110 is shown in double dot dash line. The S-type distributing valve 120 includes an S-type bend pipe 121, a cutting ring 122 and a glasses plate 123. The S-type bend pipe 121 is mounted in the hopper 110. An output end of the S-type bend pipe 121 is rotatably mounted on one sidewall of the hopper 100 and is in communication with a delivery pipe located outside the hopper 110. The cutting ring 122 is mounted at an input end of the S-type bend pipe 121. The glasses plate 123 is fixed on the other sidewall of the hopper 110 and has two delivery holes communicating with two delivery cylinder 140 respectively. The cutting ring 122 and the input end of the S-type bend pipe 121 may swing laterally in the hopper 100 under driving of a driving mechanism 130, and communicate with the two delivery cylinders 140 by the corresponding delivery holes in the glasses plate 123 separately. Thus, the two delivery cylinders 140 may pump concrete slurry to the delivery pipe via the S-type bend pipe 120 alternately. The S-type distributing valve has some advantages. For example, since the high pressure produced in pumping material by the delivery cylinder mainly acts on the inner wall of the S-type bend pipe 121, there is a uniform tensile stress in the whole S-type bend pipe 121 which has a circular cross section, and thus the S-type distributing valve may withstand a relatively great pressure. The cutting ring 122 is mounted on the input end of the S-type bend pipe 121 by means of a rubber spring or other elastic components. Besides, a floating sealing structure is used between the glasses plate 123 and the cutting ring 122 so as to maintain a predetermined pressing force between the cutting ring 122 and the glasses plate 123, thereby keeping a better sealing performance. In addition, the deformation of the rubber spring or other elastic components may automatically compensate the clearance generated by wearing. Thus, the S-type distributing valve 120 may further have a larger operating pressure which may be up to 16Mpa or even more. Therefore, by utilizing the S-type distributing valve 120, the concrete pump may pump concrete slurry by a longer distance or to a higher position, so as to meet more requirements. However, the S-type distributing valve 120 has some disadvantages. For example, the S-type bend pipe 121 of the S-type distributing valve 120 is located in the hopper 110 and occupies a part of volume of the hopper 110, so as to disadvantageously affect the flowing of concrete slurry, thus affecting the sucking performance of the concrete pump. In addition, the pumping of the two delivery cylinders are both implemented by means of the S-type bend pipe 121, which speeds up the wearing of the S-type bend pipe 121 and shortens the service life of the S-type bend pipe 121.

The document WO 2009/003784 A2 representing the closest prior art shows in Fig. 1 a concrete pump with a transfer tube that occupies a part of volume of a hopper.

The document WO 99/09315 relates to a two-cylinder thick matter pump with a tubular separator housing having a hollow space that is constantly under manometric pressure.

In view of the disadvantages of two kinds of distributing valve described above, the technical problem which is difficult to be solved in the prior art is to meet the requirements of pumping concrete slurry at a high pressure while improving the sucking performance of a concrete pump.

### SUMMARY OF THE INVENTION

In view of the technical problems mentioned above, an object of a first aspect of the present invention is to provide a distributing valve for a concrete pump which may improve a material sucking performance of a concrete pump and may meet a requirement for pumping concrete slurry at a high pressure.

Based on the above distributing valve, an object of a second aspect of the present invention is to provide a concrete pump and a concrete pump vehicle which have the distributing valve described above.

In addition, based on the above-mentioned distributing valve for the concrete pump, an object of a third aspect of the present invention is to provide a control method of a concrete pump.

In order to achieve the object of the first aspect, the distributing valve for the concrete pump according to the present invention includes a valve body and a wear resistant plate. The valve body includes a first material suction pipe and a first material pumping pipe. Front ends of the first material suction pipe and the first material pumping pipe are respectively provided with cutting rings matched with the wear resistant plate. A rear end of the first material suction pipe is in communication with an outlet of a hopper, and a rear end of the first material pumping pipe rotatably communicates with a delivery pipe of the concrete pump. The wear resistant plate has a delivery hole.

The valve body is driven by a driving mechanism to switch between a first state where a hole of the cutting ring of the first material suction pipe is in communication with the delivery hole, and a second state where a hole of the cutting ring of the first material pumping pipe is in communication with the delivery hole.

Preferably, the wear resistant plate has two delivery holes. The valve body further includes a second material pumping pipe. A front end of the second material pumping pipe is provided with a cutting ring matched with the wear resistant plate, and a rear end of the second material pumping pipe rotatably communicates with the delivery pipe.

In the first state, the holes the cutting rings of the first material suction pipe and the second material pumping pipe communicate with the two delivery holes respectively; and in the second state, the holes of the cutting rings of the first material suction pipe and the first material pumping pipe communicate with the two delivery holes respectively.

Preferably, the valve body also includes a universal joint. The universal joint has one end rotatably connected with the rear end of the first material suction pipe and the other end connected with the outlet of the hopper.

Optionally, the first material suction pipe, the first material pumping pipe and the second material pumping pipe are synchronously swayed under driving of driving mechanism.

Optionally, the rear end of the first material pumping pipe and the rear end of the second material pumping pipe converge to form a delivery end which rotatably communicates with the delivery pipe. The first material pumping pipe and the second material pumping pipe are driven by the driving mechanism to rotate about a central axis of the delivery end.

Preferably, the valve body further includes a universal joint. The universal joint has one end rotatably connected with the rear end of the first material suction pipe. The first material pumping pipe is fixed relative to the first material suction pipe.

Preferably, the first material pumping pipe and the second material pumping pipe are symmetrically disposed with respect to the first material suction pipe.

Preferably, the wear resistant plate has two delivery holes. The valve body further includes a second material suction pipe. A front end of the second material suction pipe is provided with a cutting ring matched with the wear resistant plate, and a rear end of the second material suction pipe communicates with the outlet of the hopper.

In the first state, the holes of the cutting rings of the first material suction pipe and first material pumping pipe communicate with the two delivery holes respectively; and in the second state, the hole of the cutting ring of the first material pumping pipe and a hole of the cutting ring of the second material suction pipe communicate with the two delivery holes respectively.

Optionally, the first material suction pipe, the first material pumping pipe and the second material suction pipe are synchronously swayed under driving of the driving mechanism.

Optionally, the rear end of the first material suction pipe and the rear end of the second material suction pipe converge to form a material suction passage which is connected with the outlet of the hopper.

Preferably, the valve body further includes a universal joint. The universal joint has one end rotatably connected with a rear end of the material suction passage.

Preferably, the first material suction pipe and the second material suction pipe are symmetrically disposed with respect to the first material pumping pipe.

To achieve the object of the second aspect described above, the concrete pump according to the present invention includes a hopper, a delivery cylinder, a delivery pipe, a driving mechanism and any distributing valve for the concrete pump mentioned above. The delivery cylinder is in communication with the delivery hole of the wear resistant plate.

The concrete pump vehicle according to the present invention includes a chassis, a boom system, and the above-mentioned concrete pump. The concrete pump is mounted on the chassis. The delivery pipe is in communication with a delivery pipe of the boom system.

In order to achieve the object of the second aspect described above, the present invention provides a control method of a concrete pump. The concrete pump includes two delivery cylinders and the distributing valve for the concrete pump described above, and the two delivery cylinders are referred to as a first delivery cylinder and a second delivery cylinder respectively. The method includes the steps of:

S110, sucking concrete slurry from the hopper through the first material suction pipe by the first delivery cylinder, and pumping concrete slurry through the second material pumping pipe by the second delivery cylinder;

S120, switching the distributing valve body to the other state; and

S130, pumping concrete slurry through the first material pumping pipe by the first delivery cylinder, and sucking concrete slurry from the hopper through the first material suction pipe by the second delivery cylinder.

The present invention also provides another control method of a concrete pump. The concrete pump includes two delivery cylinders and the distributing valve for the concrete pump described above. The two delivery cylinders are referred to as a first delivery cylinder and a second delivery cylinder respectively. The method includes the steps of:

S210, sucking concrete slurry from the hopper through the first material suction pipe by the first delivery cylinder, and pumping concrete slurry through the first material pumping pipe by the second delivery cylinder;

S220, switching the distributing valve body to the other state; and

S130, pumping concrete slurry through the first material pumping pipe by the first delivery cylinder, and sucking concrete slurry from the hopper through the second material suction pipe by the second delivery cylinder.

Compared with the prior art, the distributing valve for the concrete pump according to the present invention is located at a predetermined position outside of the hopper. The valve body of the distributing valve includes at least two pipes. One of the pipes, i.e. the first material suction pipe, communicates the hopper with the delivery cylinder to facilitate the delivery cylinder sucking concrete slurry; and the other pipe, i.e. the first material pumping pipe, serves to communicate the delivery cylinder with the delivery pipe to pump concrete slurry. By switching between the first state and the second state, the concrete pump may pump concrete slurry to the outside in a predetermined manner. Since the distributing valve is located outside the hopper, and preferably located under the hopper, the concrete pump may make full use of the self-flowing performance of concrete flurry, so that concrete flurry may smoothly enter into the delivery cylinder to improve the sucking performance of the concrete pump. Besides, when concrete slurry is pumped to the outside through the first material pumping pipe, the high pressure of concrete slurry mainly acts on the inner wall of the first material pumping pipe, and the first material pumping pipe uniformly bears the force. Thus, the distributing valve has a relatively high pressure withstanding capacity, and concrete slurry may have a relatively high pressure by the delivery cylinder, so as to meet the requirement of pumping concrete slurry at a high pressure.

In a further preferred technical solution, the second material pumping pipe communicating with the delivery pipe is provided. In the first state, the holes of the cutting rings of the front ends of the first material suction pipe and the second material pumping pipe are in communication with two delivery holes respectively. In this case, one delivery cylinder may pump concrete slurry through the second material pumping pipe, and the other delivery cylinder may suck concrete slurry through the first material suction pipe. In the second state, the holes of the cutting rings of the front ends of the first material suction pipe and the first material pumping pipe are in communication with the two delivery holes respectively. In this case, one delivery cylinder may suck concrete slurry through the first material suction pipe, and the other delivery cylinder may pump concrete slurry through the first material pumping pipe. The distributing valve in this technical solution may repeatedly pump concrete slurry to the outside through the first material pumping pipe and the second material pumping pipe, which may reduce the wearing rate of the valve body and prolong the service life and the maintenance intervals of the valve body.

In a further preferred technical solution, the universal joint is connected between the rear end of the first material pumping pipe and the outlet of the hopper. This technical solution may improve the sealing performance of the distributing valve while facilitating the state switching of the distributing valve, so as to prevent concrete slurry from leaking at the junction between the rear end of the first material suction pipe and the hopper.

In a further preferred technical solution, the rear end of the first material pumping pipe and the rear end of the first material pumping pipe to form the delivery end, so as to form a "Y" type structure body. Such a structure body may reduce the pumping resistance when concrete slurry is pumped and improve the service performance of the concrete pump. The delivery end rotatably communicates with the delivery pipe, and the "Y" type structure body may be moved under driving of one driving mechanism, so as to facilitate the switching of the distributing valve between the first state and the second state. In a further technical solution, the universal joint is connected between the rear end of the first material suction pipe and the outlet of the hopper, and is rotatably connected with the rear end of the first material suction pipe. In this case, the first material suction pipe may be fixed relative to the first material pumping pipe, i.e. fixed with the "Y" type structure body. In this way, the state switching of the distributing valve may be realized only by one driving mechanism.

In an optional technical solution, the second material suction pipe communicating with the hopper is provided. In the first state, the holes of the cutting rings of the front ends of the first material suction pipe and the first material pumping pipe are aligned with two delivery holes respectively; so that one delivery cylinder may suck concrete slurry through the first material suction pipe, and the other delivery cylinder may pump concrete slurry through the first material pumping pipe. In the second state, the holes of the cutting rings of the front ends of the first material pumping pipe and the second material suction pipe are in communication with two delivery holes respectively. In this case, one delivery cylinder may pump concrete slurry through the first material pumping pipe, and the other delivery cylinder may suck concrete slurry through the second material suction pipe. The distributing valve in this technical solution may be adaptable to the double-delivery-cylinder structure of the concrete pump in the prior art while achieving the object of the present invention.

Based on the above distributing valve, the concrete pump with this distributing valve may also provide the corresponding technical effects. In a preferred technical solution, the outlet is oriented downwardly, so that concrete slurry in the hopper may more easily flow into the corresponding delivery cylinder, thereby further improving the sucking performance of the concrete pump. The concrete pump vehicle which is provided based on the concrete pump also provides the corresponding technical effects.

Based on the above-mentioned distributing valve, the control method of the concrete pump may sufficiently utilize the characteristic of the above-mentioned distributing valve, so as to meet the requirement of pumping concrete slurry at a high pressure while improving the sucking performance of the concrete pump, thus improving the operating efficiency of the concrete pump and lowering the wearing rate of the distributing valve.

### BRIEF DESCRIPTION OF THE DRAWINGS

Fig.1 is a structural view of an S-type distributing valve in the prior art;

Fig.2 is a schematic structural view of a distributing valve for a concrete pump according to a first embodiment of the present invention, which also illustrates a pumping principle of the distributing valve;

Fig.2-1 is a schematic structural view of the distributing valve for the concrete pump shown in Fig.2 in a first state;

Fig.2-2 is a schematic structural view of the distributing valve for the concrete pump shown in Fig.2 in a second state;

Fig.3 is a schematic perspective view of the structure of a distributing valve for a concrete pump according to a second embodiment of the present invention;

Fig.3-1 is a schematic structural view of the distributing valve for the concrete pump shown in Fig.3 in a first state;

Fig.3-2 is a schematic structural view of the distributing valve for the concrete pump shown in Fig.3 in a second state;

Fig.3-3 is a schematic view showing the sucking principle of the distributing valve for the concrete pump shown in Fig.3;

Fig.4 is a flowchart of a control method of a concrete pump according to the present invention;

Fig.5 is a schematic structural view of a distributing valve for a concrete pump according to a third embodiment of the present invention;

Fig.6 is a flowchart of another control method of a concrete pump according to the present invention;

Fig.7-1 is a schematic view illustrating the movement principle of a distributing valve for a concrete pump according to a fourth embodiment of the present invention in a first state; and

Fig.7-2 is a schematic view illustrating the movement principle of the distributing valve for the concrete pump according to the fourth embodiment of the present invention in a second state.

### DETAILED DESCRIPTION OF THE INVENTION

The present invention will be described in detail hereinafter in conjunction with the drawings. The description in this section is only illustrative and explanatory, and should not be considered to limit the protection scope of the present invention. It should be noted that although technical solutions according to the present invention is described by taking a concrete pump for pumping concrete slurry as an example, the technical solutions are also applied to other pumping equipments or mechanisms for pumping mud or other sticky matter which has the same properties as concrete slurry.

In order to more clearly describe the technical solutions according to the present invention, a distributing valve for a concrete pump will be described hereinafter in conjunction with the structure of the concrete pump.

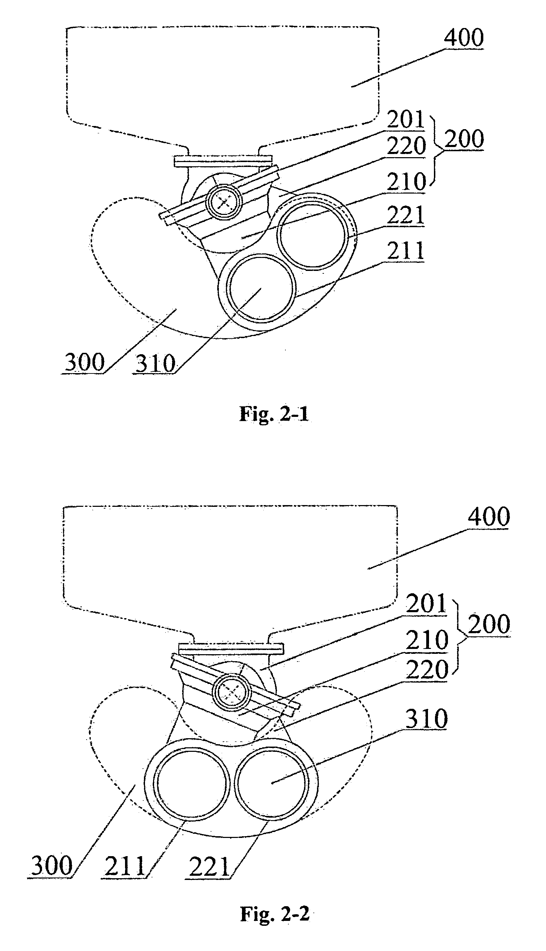

Referring to Figs.2, 2-1 and 2-2, Fig.2 is a schematic structural view of a distributing valve for a concrete pump according to a first embodiment of the present invention, which also illustrates a pumping principle of the distributing valve; Fig.2-1 is a schematic structural view of the distributing valve for the concrete pump shown in Fig.2 in a first state; and Fig.2-2 is a schematic structural view of the distributing valve for the concrete pump shown in Fig.2 in a second state. In the drawings, for showing the structure of the distributing valve clearly, the outline of a hopper 400 is shown in double dot dash line. In Figs.2-1 and 2-2, for more clearly showing the relation between a cutting ring and a wear resistant plate, the outline of the wear resistant plate is shown in a dash line.

In the following description, taking an operating plane P as a reference, the left side of the operating plane P is defined as the front and the right side thereof is defined as the rear.

A distributing valve for a concrete pump according to a first embodiment includes a valve body 200 and a wear resistant plate 300. The valve body 200 includes a first material suction pipe 210 and a first material pumping pipe 220. Front ends of the first material suction pipe 210 and the first material pumping pipe 220 are provided with a cutting ring 211 and a cutting ring 221, respectively. The cutting ring 211 and the cutting ring 221 cooperate with the wear resistant plate 300. The wear resistant plate 300 may have the same material and property as a glasses plate in the prior art. When a state of the distributing valve is switched, the cutting ring 213 and the cutting ring 214 slide along a predetermined route in the operating plane P of the wear resistant plate 220, such that holes of the cutting ring 213 and the cutting ring 214 are alternatively in communication with a delivery hole 310 of the wear resistant plate 300 in a certain period.

Preferably, a rear end of the first material suction pipe 210 is in movable connection with an outlet 401 of the hopper 400. The term "movable connection" indicates that, when the hopper 400 is fixed, the first material suction pipe 210 may be swung to ensure that a delivery cylinder may smoothly suck material from the hopper 400, so as to adapt to the requirement of switching the state of the distributing valve. The movable connection may be realized by a flexible structure or a hinge structure. The rear end of the first material pumping pipe 220 is rotatably connected with a delivery pipe (not shown) of the concrete pump, such that the first material pumping pipe 220 is kept in communication with the delivery pipe when the state of the distributing valve is switched.

In the embodiment, the first material suction pipe 210 is fixed relative to the first material pumping pipe 220, so that the cutting ring 211 and the cutting ring 220 may be of an integrated structure, both of which may rotate about an axis X under driving of a driving mechanism 500, and thus by this rotation movement, the distributing valve is switched between a first state and a second state described hereinafter.

The valve body 200 further includes a universal joint 201 which is connected between the rear end of the first material suction pipe 210 and the outlet 401 of the hopper 400. The universal joint 201 is of a hollow structure to form a corresponding passage, so that concrete slurry may be easily pass through the first material suction pipe 210 into a predetermined delivery cylinder. The upper end of the universal joint 201 is connected with the outlet 401 of the hopper 400 by a flange, and the lower end of the universal joint 201 has a convex circular surface engaged with a concave circular surface of the rear end of the first material suction pipe 210 to form a hinge engagement, so that the universal joint 201 may rotate relative to the first material suction pipe 210. In this way, the state of the distribute valve may be switched conveniently, while ensuring a sealing performance of the engagement between the rear end of the first material suction pipe 210 and the hopper 400, so as to prevent concrete slurry from leaking through the engagement therebetween.

As shown in Fig.2-1, the valve body 200 is located at a right position under driving of the driving mechanism 500, and is maintained in the first state where a hole of the cutting ring 211 is aligned with and communicates with a delivery hole 310. In this case, the delivery cylinder corresponding to the delivery hole 310 may smoothly suck concrete slurry from the hopper 400 through the first material suction pipe 210. As shown in Fig.2-2, the valve body 200 is located at a left position under driving of the driving mechanism 500, and is maintained in the second state where the hole of the cutting ring 221 is aligned with and communicates with the delivery hole 310. In this case, the delivery cylinder corresponding to the delivery hole 310 may press concrete slurry sucked in the first state into the delivery pipe through the first material pumping pipe 220. Concrete slurry is pumped to the outside, as shown by an arrow in Fig.2.

In the embodiment, since the distributing valve is under the hopper 400, the self-flowing performance of concrete slurry may be fully utilized such that the delivery cylinder may more easily suck concrete slurry, thereby improving the sucking performance of the concrete pump. Besides, when concrete slurry is pumped through the first material pumping pipe 220 to the outside, since high pressure of concrete slurry mainly acts on an inner wall of the first material pumping pipe 200, the distributing valve has a relatively high pressure withstanding capacity. Furthermore, the cutting ring and a corresponding pipe may be connected by a rubber spring or any other elastic mechanism, such that the pressing force between the cutting ring and the wear resistant plate 300 is maintained to improve the sealing performance at the engagement therebetween and to automatically compensate the clearance generated from wearing, thereby improving the pressure withstanding capacity of the distributing valve. Thus, the delivery cylinder allows concrete slurry to have a higher pressure to meet the requirement of pumping concrete slurry at a high pressure, thereby improving the efficiency of the concrete pump and widening the application ranges of the concrete pump.

According to the above description, in the present invention, the corresponding pipes withstanding a high pressure are provided, and the pipe communicating the hopper 400 with the delivery cylinder is further provided separately, so that the sucking performance of the concrete pump is improved while meeting the requirement of pumping concrete slurry at a high pressure. Furthermore, when the concrete pump is operated, different pipes are used for pumping and sucking material respectively, which may reduce the wearing rate of the valve body 200, so as to prolong the service life and the maintenance interval of the distributing valve.

In the embodiment, the structure of the first material pumping pipe 220 is the same as the S-type bend pipe in the prior art; a operating plane of the wear resistant plate 300 is a vertical plane; and the end faces of the rear end and the front end of the first material pumping pipe 220 are also vertical planes. Such a structure may be fitted with the delivery cylinder of the concrete pump in the prior art. In addition, a suitable structure, e.g. a C-type pipe, etc., may be selected for the first material pumping pipe 220 according to various actual operations or structures of the concrete pump.

In the embodiment, the first material suction pipe 210 is an L-shaped pipe, which includes a vertical part protruding upwardly and movably connected with the outlet 401 of the lower part of the hopper 400, and a transverse part on which the cutting ring 211 is mounted. For utilizing the self-flowing performance of concrete slurry fully, the outlet 401 is preferably provided at the bottom of the hopper 400 or at the lowest part of the hopper 400, and is opened downwardly. Thus, on the one hand, such a structure is convenient for the delivery cylinder to suck concrete slurry, and on the other hand, it is convenient to wash the hopper. Similarly, the first material suction pipe 210 is not limited to the L-shaped pipe, but may be of any other suitable structure and shape according to the actual situation and the specific structure of the concrete pump.

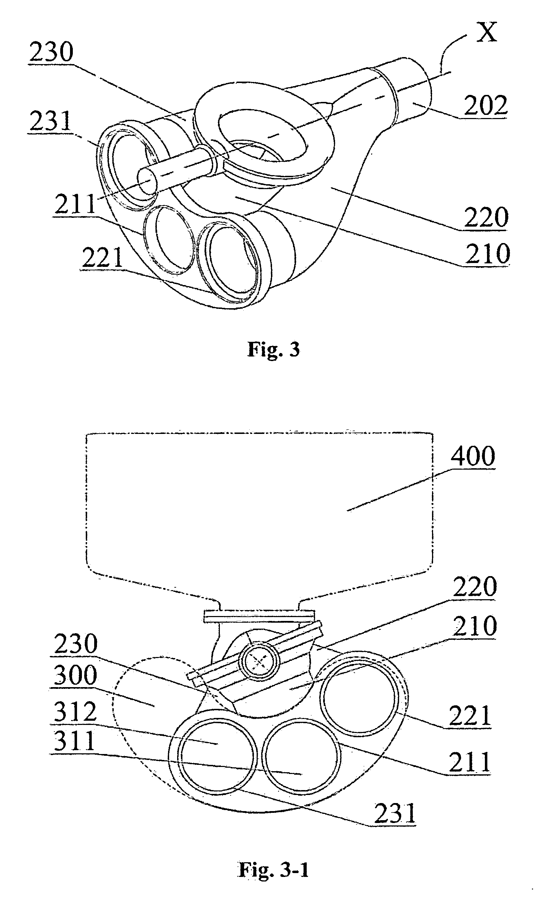

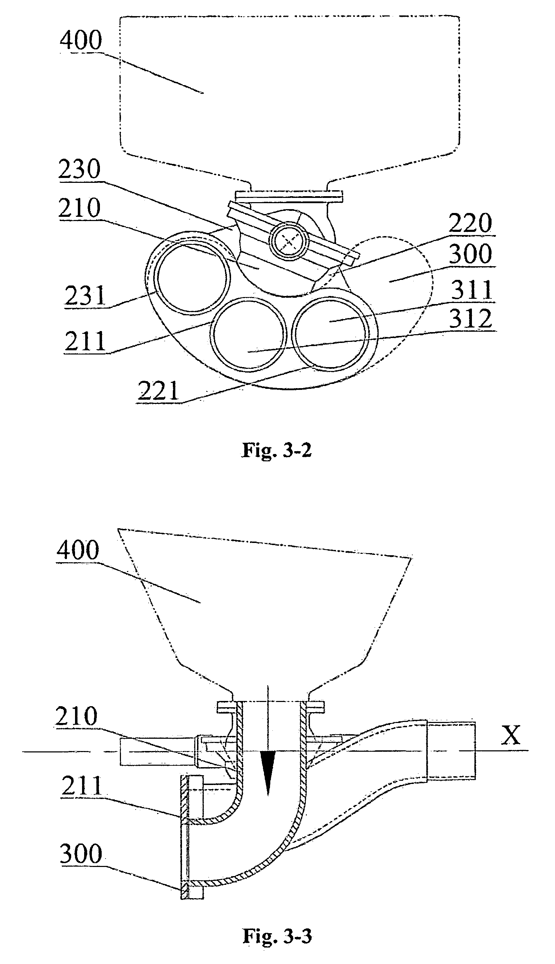

Referring to Figs.3, 3-1 and 3-2, Fig.3 is a schematic perspective view of the structure of a distributing valve for a concrete pump according to a second embodiment of the present invention; Fig.3-1 is a schematic structural view of the distributing valve for the concrete pump shown in Fig.3 in a first state; Fig.3-2 is a schematic structural view of the distributing valve for the concrete pump shown in Fig.3 in a second state; and Fig.3-3 is a schematic view showing the sucking principle of the distributing valve for the concrete pump shown in Fig.3.

Compared with the first embodiment, the distributing valve for the concrete pump according to the second embodiment further includes a second material pumping pipe 230 and the wear resistant plate 300 with two delivery holes. For the convenience of description, the two delivery holes are named as a first delivery hole 311 and a second delivery hole 312, respectively. The wear resistant plate may be the same as the glasses plate in the prior art. In the embodiment, the second material pumping pipe 230 is also an S-type bend pipe. The second material pumping pipe 230 and the first material pumping pipe 220 are symmetrical with respect to the first material suction pipe 210. The rear end of the first material pumping pipe 220 and the rear end of the second material pumping pipe 230 are converged to form a delivery end 202, so as to form a "Y" type structure body. The delivery end 202 rotatably communicates with the delivery pipe, and the central axis of the delivery end 202 coincides with the above-mentioned axis X. Thus, while the driving mechanism 500 drives the valve body 200 to achieve a state switching, the delivery end 202 may be in communication with the delivery pipe, so as to maintain the service performance of the concrete pump while reducing the resistance of pumping material. Similarly, the front end of the second material pumping pipe 230 also has a cutting ring 231 cooperating with the wear resistant plate 300. The cooperation states between the cutting rings 211, 221, 231 and the wear resistant plate 300 may be different according to the different states of the distributing valve.

As shown in Figs.3-1 and 3-2, in the first state, the holes of the cutting ring 211 and the cutting ring 231 are in communication with the first delivery hole 311 and the second delivery hole 312 respectively, and the hole of the cutting ring 221 abuts against the operating plane of the wear resistant plate 300 so that the front end of the first material pumping pipe 220 is in a closed state. In the second state, the holes of the cutting ring 211 and the cutting ring 221 are in communication with the second delivery hole 312 and the first delivery hole 311 respectively, in this case, the hole of the cutting ring 231 abuts against the operating plane of the wear resistant plate 300 so that the front end of the second material pumping pipe 230 is in a closed state.

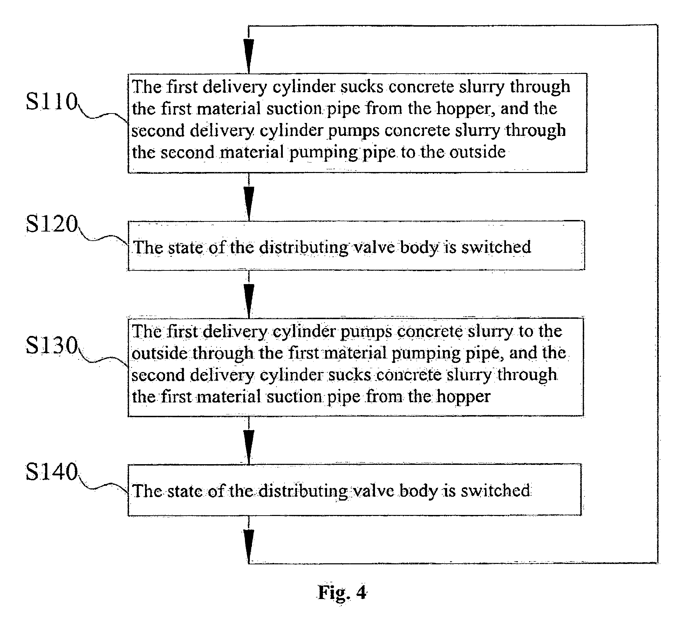

Hereinafter, the operating principle of the distributing valve according to the second embodiment will be described in conjunction with the two delivery cylinders (not shown) of the concrete pump; and a control method of the concrete pump according to the present invention will be described together. The control method will not be described lonely. Referring to Fig.4, Fig.4 is a flowchart of a control method of a concrete pump according to the present invention. For the convenience of description, the delivery cylinder corresponding to the first delivery hole 311 is referred to as the first delivery cylinder, and the delivery cylinder corresponding to the second delivery hole 312 is referred to as the second delivery cylinder.

Taking the first state shown in Fig.3-1 as a start point, the control method of the concrete pump may include the following steps.

In S110, the first delivery cylinder sucks concrete slurry from the hopper 400 through the first material suction pipe 210, and the second delivery cylinder pumps concrete slurry through the second material pumping pipe 230 to the outside. In the first state, the holes of the cutting ring 211 and the cutting ring 231 are in communication with the first delivery hole 311 and the second delivery hole 312 respectively, so that the first delivery cylinder corresponding to the first delivery hole 311 may suck a predetermined amount of concrete slurry from the hopper 400. For the sucking principle, please refer to Fig.3-3. Meanwhile, a second delivery cylinder corresponding to the second delivery hole 312 may pump concrete slurry to the delivery pipe through the second material pumping pipe 230. The first delivery cylinder and the second delivery cylinder are reversed when reaching the predetermined positions.

In S120, the state of the distributing valve is switched. That is, the distributing valve body is rotated by a predetermined angle under driving of the driving mechanism 500, so as to be switched to the second state shown in Fig.3-2.

In S130, the first delivery cylinder pumps concrete slurry through the first material pumping pipe 220 to the outside, and the second delivery cylinder sucks concrete slurry from the hopper 400 through the first material suction pipe 210. In the second state, the holes of the cutting ring 211 and the cutting ring 221 are in communication with the second delivery hole 312 and the first delivery hole 311 respectively, in this case, the first delivery cylinder and the second delivery cylinder move in reverse directions, so that the second delivery cylinder corresponding to the second delivery hole 312 sucks concrete slurry through the first material suction pipe 210, and the first delivery cylinder corresponding to the first delivery hole 311 pumps concrete slurry to the delivery pipe through the first material pumping pipe 220. The first delivery cylinder and the second delivery cylinder are switched when reaching the predetermined positions.

In S140, the state of the distributing valve is switched to the first state shown in Fig.3-1 again. Return to step S100 and repeat the above-mentioned process, so as to pump concrete slurry to the predetermined position continuously.

The three pipes of the valve body 200 of the distributing valve according to the second embodiment are fixed relative to each other and may be rotated and swung in whole under driving of the driving mechanism 500 to switch from one state to another state. Such a structure is simple in structure and is convenient for controlling.

According to the above description of the present invention, the object of the present invention may be achieved in other manners. The third embodiment of the present invention provides a distributing valve for a concrete pump having another structure.

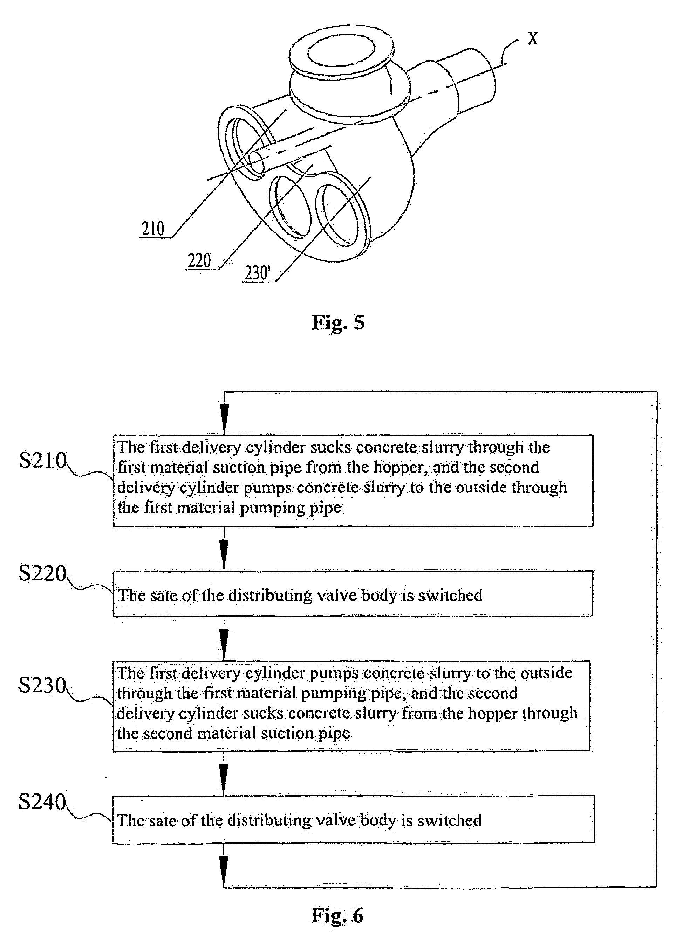

Referring to Fig.5, a schematic structural view of a distributing valve for a concrete pump according to a third embodiment of the present invention is shown. A valve body 200 of the distributing valve for the concrete pump includes a second material suction pipe 230'. The second material suction pipe 230' has a front end provided with a cutting ring, and a rear end communicating with the hopper 400, such that the corresponding delivery cylinder may suck material through the second material suction pipe 230'. In the embodiment, preferably, the first material suction pipe 210 and the second material suction pipe 230' are disposed symmetrically, and converge at the upper ends of them to form a sucking passage communicating with the outlet 401 of the hopper 400. The sucking passage may communicate with the hopper 400 through a universal joint. The other parts of this distributing valve in this embodiment may be the same as the structure of the distributing valve for concrete pump according to the second embodiment. The rear end of the first material pumping pipe 220 rotatably communicates with the delivery pipe, and the central axis of the rear end coincides with the above-mentioned axis X, so that the rear end may be kept in communication with the delivery pipe when the state of the valve body 200 is switched under driving of the driving mechanism 500.

Thus, by the corresponding delivery holes and cutting rings, in the first state, the first delivery cylinder may communicate with the first material suction pipe 210, and the second delivery cylinder may communicate with the first material pumping pipe 220; and in the second state, the first delivery cylinder may communicate with the first material pumping pipe 220, and the second delivery cylinder may communicate with the second material suction pipe 230'.

Hereinafter, the operating principle of the distributing valve according to the third embodiment will be described in conjunction with two delivery cylinders (not shown) of the concrete pump; and another control method of the concrete pump according to the present invention will be described together.

Referring to Fig.6, a flowchart of another control method of a concrete pump according to the present invention is shown. The method includes the following steps.

In S210, the first delivery cylinder sucks concrete slurry from the hopper 400 through the first material suction pipe 210, and the second delivery cylinder pumps concrete slurry through the first material pumping pipe 220 to the outside. The first delivery cylinder and the second delivery cylinder are reversed when reaching the predetermined positions.

In S220, the state of the distributing valve is switched. That is, the distributing valve body is rotated by a predetermined angle under driving of the driving mechanism 500, so as to be switched to the second state.

In S230, the first delivery cylinder pumps concrete slurry through the first material pumping pipe 220 to the outside, and the second delivery cylinder sucks concrete slurry form the hopper 400 through the second material suction pipe 230'. The first delivery cylinder and the second delivery cylinder are reversed when reaching the predetermined positions.

In S240, the state of the distributing valve is switched. Return to step S210, and repeat the above-mentioned process so as to pump concrete slurry to the predetermined position continuously.

According to the above description, besides the three pipes, a forth pipe may be further provided in order to make each pipe be worn at a same speed. Based on the distributing valve for the concrete pump according to the second embodiment, the first material suction pipe 210 and the forth pipe may communicate with the hopper 400, and the first material pumping pipe 220 and the second material pumping pipe 230 may communicate with the delivery pipe. In one state, one delivery cylinder pumps material through the second material pumping pipe 230, and the other delivery cylinder sucks material through the first material suction pipe 210; and in the other state, one delivery cylinder sucks material through the forth pipe, and the other delivery cylinder pumps material through the first material pumping pipe 220. Based on the distributing valve for the concrete pump according to the third embodiment, the first material suction pipe 210 and the second material suction pipe 230' may communicate with the hopper 400, and the second material pumping pipe 230 and the forth pipe may communicate with the delivery pipe. In one state, one delivery cylinder pumps material through the second material pumping pipe 230, and the other delivery cylinder sucks material through the first material suction pipe 210; and in the other state, one delivery cylinder pumps material through the forth pipe, and the other delivery cylinder sucks material through the second material suction pipe 230', and otherwise.

It is understood that the three pipes of the valve body 200 are not limited to an integrated structure, but may be of a detachable structure which may synchronously move under driving of the driving mechanism so as to achieve the object of the present invention.

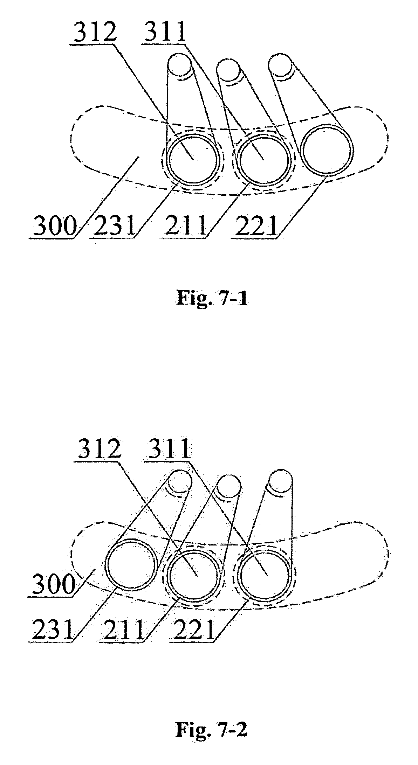

Referring to Figs.7-1 and 7-2, Fig.7-1 is a schematic view illustrating the movement principle of a distributing valve for a concrete pump according to a forth embodiment of the present invention in a first state; and Fig.7-2 is a schematic view illustrating the movement principle of a distributing valve for a concrete pump according to a forth embodiment of the present invention in a second state. In the drawings, only the relative movement principle between the three cutting rings and the wear resistant plate is shown. In the distributing valve according to the forth embodiment, the first material suction pipe 210 is rotatably connected with the hopper 400; the first material pumping pipe 220 and the second material pumping pipe 230 are rotatably connected with the suitable parts of the delivery pipe respectively; and these three pipes are relatively independent. As shown in Fig.7-1, in the first state which is the same as the first state of the second embodiment, the holes of the cutting ring 211 and the cutting ring 231 communicate with the first delivery hole 311 and the second delivery hole 312 respectively; and in the second state, the holes of the cutting ring 211 and the cutting ring 221 communicate with the second delivery hole 312 and the first delivery hole 311 respectively. The operating principle and the operating process of the forth embodiment are the same as the second embodiment, which will not be described repeatedly herein.

Based on the distributing valve described above, the present invention further provides a concrete pump which includes a hopper 400, a delivery cylinder, a delivery pipe, a driving mechanism 500 and any distributing valve for the concrete pump described above. The delivery cylinder is in communication with the delivery hole of the wear resistant plate 300, and stretches and withdraws under driving of a hydraulic cylinder. Corresponding to the distributing valve described above, the concrete pump according to the present invention may also have the corresponding technical effects and technical features which will not be described herein. Based on the above-mentioned concrete pump, a concrete pump vehicle is further provided, which includes a chassis, a boom system and the concrete pump described above. The chassis is a movable chassis. The boom system includes a plurality of boom sections hinged in sequence and a delivery pipe transporting concrete slurry to a predetermined position. The concrete pump described above is mounted on the chassis, and the delivery pipe of the concrete pump is in communication with the delivery pipe of the boom system.

The above-mentioned description is just the preferred embodiments of the present invention. It should be noted that some improvements, modifications and variations may be made by the skilled in the art without departing from the principles of the present invention, for example, the cutting ring may be a part of the corresponding pipe, or may be a component provided separately and having a relatively high wear resistant performance; and these improvements, modifications and variations should be deemed to fall into the scope of protection of the present invention.

## Claims

1. A concrete pump, comprising a hopper (400), a delivery cylinder, a delivery pipe, a driving mechanism (500), and a distributing valve, wherein
the distributing valve comprises a valve body (200) and a wear resistant plate (300), **characterized in that**,
the valve body (200) comprises a first material suction pipe (210) and a first material pumping pipe (220), a front end of the first material suction pipe (210) is provided with a cutting ring (211), a front end of the first material pumping pipe (220) is provided with a cutting ring (221), the cutting ring (211) of the first material suction pipe (210) and the cutting ring (221) of the first material pumping pipe (220) cooperate with the wear resistant plate (300), a rear end of the first material suction pipe (210) communicates with an outlet (401) of the hopper (400), a rear end of the first material pumping pipe (220) rotatably communicates with the delivery pipe of the concrete pump,
the wear resistant plate (300) has a delivery hole; and
wherein the valve body (200) is operable to be driven by the driving mechanism (500) to switch between a first state where a hole of the cutting ring (211) of the first material suction pipe (210) is in communication with the delivery hole, and a second state where a hole of the cutting ring (221) of the first material pumping pipe (220) is in communication with the delivery hole, and
the delivery cylinder communicates with the delivery hole of the wear resistant plate (300).

2. The concrete pump according to claim 1, wherein the wear resistant plate (300) has two delivery holes; the valve body (200) further comprises a second material pumping pipe (230), a front end of the second material pumping pipe (230) is provided with a cutting ring matched with the wear resistant plate (300), and a rear end of the second material pumping pipe (230) rotatably communicates with the delivery pipe; and
wherein in the first state, the holes of the cutting rings of the first material suction pipe (210) and the second material pumping pipe (230) communicate with the two delivery holes respectively; and in the second state, the holes of the cutting rings of the first material suction pipe (210) and the first material pumping pipe (220) communicate with the two delivery holes respectively.

3. The concrete pump according to claim 2, wherein the valve body (200) also comprises a universal joint (201), the universal joint (201) has one end rotatably connected with the rear end of the first material suction pipe (210) and the other end connected with the outlet (401) of the hopper (400).

4. The concrete pump according to claim 2, wherein the first material suction pipe (210), the first material pumping pipe (220) and the second material pumping pipe (230) are operable to be synchronously swayed under driving of the driving mechanism (500).

5. The concrete pump according to claim 2, wherein the rear end of the first material pumping pipe (220) and the rear end of the second material pumping pipe (230) converge to form a delivery end (202) which rotatably communicates with the delivery pipe; the first material pumping pipe (220) and the second material pumping pipe (230) are operable to be driven by the driving mechanism (500) to rotate about a central axis of the delivery end (202).

6. The concrete pump according to claim 5, wherein the valve body (200) further comprises a universal joint (201), the universal joint (201) has one end rotatably connected with the rear end of the first material suction pipe (210); the first material pumping pipe (220) is fixed relative to the first material suction pipe (210).

7. The concrete pump according to any of claims 2 to 6, wherein the first material pumping pipe (220) and the second material pumping pipe (230) are symmetrically disposed with respect to the first material suction pipe (210).

8. The concrete pump according to claim 1, wherein the wear resistant plate (300) has two delivery holes; the valve body (200) further comprises a second material suction pipe (230'), a front end of the second material suction pipe (230') is provided with a cutting ring matched with the wear resistant plate (300), and a rear end of the second material suction pipe (230') communicates with the outlet (401) of the hopper; and
wherein in the first state, the holes of the cutting rings of the first material suction pipe (210) and the first material pumping pipe (220) communicate with the two delivery holes respectively; and in the second state, the hole of the cutting ring of the first material pumping pipe (220) and a hole of the cutting ring of the second material suction pipe (230') communicate with the two delivery holes respectively.

9. The concrete pump according to claim 8, wherein the first material suction pipe (210), the first material pumping pipe (220) and the second material suction pipe (230') are operable to be synchronously swayed under driving of the driving mechanism (500).

10. The concrete pump according to claim 8, wherein the rear end of the first material suction pipe (210) and the rear end of the second material suction pipe (230') converge to form a material suction passage which is connected with the outlet (401) of the hopper (400).

11. The concrete pump according to claim 10, wherein the valve body (200) further comprises a universal joint, the universal joint has one end rotatably connected with a rear end of the material suction passage.

12. A concrete pump vehicle comprising a chassis, a boom system, **characterized in that**, the concrete pump vehicle further comprises the concrete pump according to any one of claims 1 to 11, the concrete pump is mounted on the chassis, and the delivery pipe communicates with a delivery pipe of the boom system.

13. A control method of the concrete pump according to any one of claims 2 to 7 comprising two delivery cylinders and the distributing valve, the two delivery cylinders being referred to as a first delivery cylinder and a second delivery cylinder respectively, **characterized in that,** the method comprises the steps of:
S110, sucking concrete slurry from the hopper (400) through the first material suction pipe (210) by the first delivery cylinder, and pumping concrete slurry through the second material pumping pipe (230) by the second delivery cylinder;
S120, switching the distributing valve body (200) to the other state; and
S130, pumping concrete slurry through the first material pumping pipe (200) by the first delivery cylinder, and sucking concrete slurry from the hopper (400) through the first material suction pipe (210) by the second delivery cylinder.

14. A control method of the concrete pump according to any one of claims 8 to 11 comprising two delivery cylinders and the distributing valve, the two delivery cylinders being referred to as a first delivery cylinder and a second delivery cylinder respectively, **characterized in that**, the method comprises the steps of:
S210, sucking concrete slurry from the hopper (400) through the first material suction pipe (210) by the first delivery cylinder, and pumping concrete slurry through the first material pumping pipe (220) by the second delivery cylinder;
S220, switching the distributing valve body (200) to the other state; and
S230, pumping concrete slurry through the first material pumping pipe (220) by the first delivery cylinder, and sucking concrete slurry from the hopper (400) through the second material suction pipe (230') by the second delivery cylinder.

## Patentansprüche

1. Eine Betonpumpe, aufweisend einen Behälter (400), einen Förderzylinder, ein Förderrohr, einen Antriebsmechanismus (500), und ein Verteilungsventil, wobei
das Verteilungsventil einen Ventilkörper (200) und eine verschleißfeste Platte (300) aufweist, **dadurch gekennzeichnet, dass**
der Ventilkörper (200) ein erstes Materialsaugrohr (210) und ein erstes Materialpumprohr (220) aufweist, ein vorderes Ende des ersten Materialsaugrohres (210) mit einem Schneidring (211) versehen ist, ein vorderes Ende des ersten Materialpumprohres (220) mit einem Schneidring (221) versehen ist, der Schneidring (211) des ersten Materialsaugrohres (210) und der Schneidring (221) des ersten Materialpumprohres (220) mit der verschleißfreien Platte (300) zusammenwirken, ein hinteres Ende des ersten Materialsaugrohres (210) mit einem Auslass (401) des Behälters (400) in Verbindung steht, ein hinteres Ende des ersten Materialpumprohres (220) drehbar mit dem Förderrohr der Betonpumpe in Verbindung steht,
die verschleißfeste Platte (300) ein Förderloch aufweist; und
wobei der Ventilkörper (200) betriebsfähig ist von dem Antriebsmechanismus (500) angetrieben zu werden, um zwischen einem ersten Zustand, in dem ein Loch des Schneidrings (211) des ersten Materialsaugrohres (210) mit dem Förderloch in Verbindung steht, und einem zweiten Zustand, in dem ein Loch des Schneidringes (221) des ersten Materialpumprohres (220) mit dem Förderloch in Verbindung steht, zu wechseln, und
der Förderzylinder mit dem Förderlich der verschleißfesten Platte (300) in Verbindung steht.

2. Die Betonpumpe nach Anspruch 1, wobei die verschleißfeste Platte (300) zwei Förderlöcher aufweist; der Ventilkörper (200) ferner ein zweites Materialpumprohr (230) aufweist, ein vorderes Ende des zweiten Materialpumprohres (230) mit einem Schneidring versehen ist, welcher an die verschleißfeste Platte (300) angepasst ist, und ein hinteres Ende des zweiten Materialpumprohres (230) drehbar mit dem Förderrohr in Verbindung steht; und
wobei in dem ersten Zustand die Löcher der Schneidringe des ersten Materialsaugrohres (210) und des zweiten Materialpumprohres (230) jeweils mit den zwei Föderlöchern in Verbindung stehen; und in dem zweiten Zustand die Löcher der Schneidringe des ersten Materialsaugrohres (210) und des ersten Materialpumprohres (220) jeweils mit den zwei Förderlöchem in Verbindung stehen,

3. Die Betonpumpe nach Anspruch 2, wobei der Ventilkörper (200) auch ein Universalgelenk (201) aufweist, wobei das Universalgelenk (201) ein Ende aufweist, welches drehbar mit dem hinteren Ende des ersten Materialsaugrohres (210) verbunden ist und wobei das andere Ende mit dem Auslass (401) des Behälters (400) verbunden ist.

4. Die Betonpumpe nach Anspruch 2, wobei das erste Materialsaugrohr (210), das erste Materialpumprohr (220) und das zweite Materialpumprohr (230) betriebsfähig sind synchron unter dem Antrieb des Antriebsmechanismus (500) bewegt zu werden.

5. Die Betonpumpe nach Anspruch 2, wobei das hintere Ende des ersten Materialpumprohres (220) und das hintere Ende des zweiten Materialpumprohres (230) zusammenlaufen, um ein Förderende (202) zu bilden, welches drehbar mir dem Förderrohr in Verbindung steht; das erste Materialpumprohr (220) und das zweite Materialpumprohr (230) sind betriebsfähig, um von dem Antriebsmechanismus (500) angetrieben zu werden, um sich um eine zentrale Achse des Förderendes (202) zu drehen.

6. Die Betonpumpe nach Anspruch 5, wobei der Ventilkörper (200) weiter ein Universalgelenk (201) aufweist, wobei das Universalgelenk (201) ein Ende aufweist, welches drehbar mit dem hinteren Ende des ersten Materialsaugrohres (210) verbunden ist; das erste Materialpumprohr (220) ist relativ zu dem ersten Materialsaugrohr (210) fest angebracht.

7. Die Betonpumpe nach einem der Ansprüche 2 bis 6, wobei das erste Materialpumprohr (220) und das zweite Materialpumprohr (230) symmetrisch bezogen auf das erste Materialsaugrohr (210) angeordnet sind.

8. Die Betonpumpe nach Anspruch 1, wobei die verschleißfeste Platte (300) zwei Förderlöcher aufweist; der Ventilkörper (200) ferner ein zweites Materialsaugrohr (230') aufweist, ein vorderes Ende des zweiten Materialsaugrohres (230') mit einem Schneidring versehen ist, welcher an die verschleißfeste Platte (300) angepasst ist, und ein hinteres Ende des zweiten Materialsaugrohres (230') mit dem Auslass (401) des Behälters in Verbindung steht; und
wobei in dem ersten Zustand die Löcher der Schneidringe des ersten Materialsaugrohres (210) und des ersten Materialpumprohres (220) jeweils mit den zwei Förderlöchern in Verbindung stehen; und in dem zweiten Zustand, das Loch des Schneidrings des ersten Materialpumprohres (220) und ein Loch des Schneidrings des zweiten Materialsaugrohres (230') jeweils mit den zwei Förderlöchern in Verbindung stehen.

9. Die Betonpumpe nach Anspruch 8, wobei das erste Materialsaugrohr (210), das erste Materialpumprohr (220) und das zweite Materialsaugrohr (230') betriebsfähig sind synchron unter dem Antrieb des Antriebsmechanismus (500) bewegt zu werden.

10. Die Betonpumpe nach Anspruch 8, wobei das hintere Ende des ersten Materialsaugrohres (210) und das hintere Ende des zweiten Materialsaugrohres (230') zusammenlaufen, um einen Materialsaugdurchlass zu bilden, welcher mit dem Auslass (401) des Behälters (400) verbunden ist.

11. Die Betonpumpe nach Anspruch 10, wobei der Ventilkörper (200) weiter ein Universalgelenk aufweiset, wobei das Universalgelenk ein Ende aufweist, welches drehbar mit einem hinteren Ende des Materialsaugdurchlasses verbunden ist.

12. Ein Betonpumpenfahrzeug aufweisend ein Chassis, ein Auslegersystem, **dadurch gekennzeichnet, dass** das Betonpumpenfahrzeug weiter die Betonpumpe nach einem der Ansprüche 1 bis 11 aufweist, die Betonpumpe auf dem Chassis montiert ist und das Förderrohr mit einem Förderrohr des Auslegersystems in Verbindung steht.

13. Ein Steuerverfahren der Betonpumpe nach einem der Ansprüche 2 bis 7, aufweisend zwei Förderzylinder und das Verteitungsventil, wobei die zwei Förderzylinder als ein erster Förderzylinder bzw. als ein zweiter Förderzylinder bezeichnet werden, **dadurch gekennzeichnet, dass** das Verfahren die Schritte aufweist von:
S110, Saugen eines Betonbreis aus dem Behälter (400) durch das erste Materialsaugrohr (210) mittels des ersten Förderzylinders und Pumpen des Betonbreis durch das zweite Materialpumprohr (230) mittels des zweiten Förderzylinders;
S120, Wechseln des Verteilungsventilkörpers (200) in den anderen Zustand; und
S130, Pumpen von Betonbrei durch das erste Materialpumprohr (200) mittels des ersten Förderzylinders und Saugen von Betonbrei aus dem Behälter (400) durch das erste Materialsaugrohr (210) mittels des zweiten Förderzylinders,

14. Ein Steuerverfahren der Betonpumpe nach einem der Ansprüche 8 bis 11 aufweisend zwei Förderzylinder und das Verteilungsventil, wobei die zwei Förderzylinder als ein erster Förderzylinder bzw. ein zweiter Förderzylinder bezeichnet werden, **dadurch gekennzeichnet, dass** das Verfahren die Schritte aufweist von:
S210, Saugen eines Betonbreis aus dem Behälter (400) durch das erste Materialsaugrohr (210) mittels des ersten Förderzylinders und Pumpen des Betonbreis durch das erste Materialpumprohr (220) mittels des zweiten Förderzylinders;
S220, Wechseln des Verteilungsventilkörpers (200) in den anderen Zustand; und
S230, Pumpen des Betonbreis durch das erste Materialpumprohr (220) mittels des ersten Förderzylinders und Saugen eines Betonbreis aus dem Behälter (400) durch das zweite Materialsaugrohr (230') mittels des zweiten Förderzylinders.

## Revendications

1. Pompe à béton, comportant une trémie (400), un cylindre d'alimentation, un tuyau d'alimentation, un mécanisme d'entraînement (500) et une vanne de distribution, dans laquelle
la vanne de distribution comporte un corps de vanne (200) et une plaque résistante à l'usure (300), **caractérisée en ce que**,
le corps de vanne (200) comporte un premier tuyau d'aspiration de matière (210) et un premier tuyau de pompage de matière (220), une extrémité avant du premier tuyau d'aspiration de matière (2 10) est munie d'une bague de coupe (211), une extrémité avant du premier tuyau de pompage de matière (220) est munie d'une bague de coupe (221), la bague de coupe (211) du premier tuyau d'aspiration de matière (210) et la bague de coupe (221) du premier tuyau de pompage de matière (220) coopèrent avec la plaque résistante à l'usure (300), une extrémité arrière du premier tuyau d'aspiration de matière (210) communique avec une sortie (401) de la trémie (400), une extrémité arrière du premier tuyau de pompage de matière (220) communique de manière rotative avec le tuyau d'alimentation de la pompe à béton,
la plaque résistante à l'usure (300) ayant un trou d'alimentation, et
dans laquelle le corps de vanne (200) peut être actionné pour être entraîné par le mécanisme d'entraînement (500) pour basculer entre un premier état où un trou de la bague de coupe (211) du premier tuyau d'aspiration de matière (210) est en communication avec le trou d'alimentation, et un second état où un trou de la bague de coupe (221) du premier tuyau de pompage de matière (220) est en communication avec le trou d'alimentation, et
le cylindre d'alimentation communique avec le trou d'alimentation de la plaque résistante à l'usure (300).

2. Pompe à béton selon la revendication 1, dans laquelle la plaque résistante à l'usure (300) a deux trous d'alimentation, le corps de vanne (200) comporte en outre un second tuyau de pompage de matière (230), une extrémité avant du second tuyau de pompage de matière (230) est munie d'une bague de coupe en correspondance avec la plaque résistante à l'usure (300), et une extrémité arrière du second tuyau de pompage de matière (230) communique de manière rotative avec le tuyau d'alimentation, et
dans laquelle, dans le premier état, les trous des bagues de coupe du premier tuyau d'aspiration de matière (210) et du second tuyau de pompage de matière (230) communiquent avec les deux trous d'alimentation respectivement, et dans le second état, les trous des bagues de coupe du premier tuyau d'aspiration de matière (210) et du premier tuyau de pompage de matière (220) communiquent respectivement avec les deux trous d'alimentation.

3. Pompe à béton selon la revendication 2, dans laquelle le corps de vanne (200) comporte également un joint articulé (201), le joint articulé (201) a une extrémité reliée de manière rotative à l'extrémité arrière du premier tuyau d'aspiration de matière (210) et l'autre extrémité reliée à la sortie (401) de la trémie (400).

4. Pompe à béton selon la revendication 2, dans laquelle le premier tuyau d'aspiration de matière (210), le premier tuyau de pompage de matière (220) et le second tuyau de pompage de matière (230) peuvent être actionnés pour osciller de manière synchrone sous l'entraînement du mécanisme d'entraînement (500).

5. Pompe à béton selon la revendication 2, dans laquelle l'extrémité arrière du premier tuyau de pompage de matière (220) et l'extrémité arrière du second tuyau de pompage de matière (230) convergent pour former une extrémité d'alimentation (202) qui communique de manière rotative avec le tuyau d'alimentation, le premier tuyau de pompage de manière (220) et le second tuyau de pompage de manière (230) peuvent être actionnés pour être entraînés par le mécanisme d'entraînement (500) pour tourner autour d'un axe central de l'extrémité d'alimentation (202).

6. Pompe à béton selon la revendication 5, dans laquelle le corps de vanne (200) comporte en outre un joint articulé (201), le joint articulé (201) a une extrémité reliée de manière rotative à l'extrémité arrière du premier tuyau d'aspiration de matière (210), le premier tuyau de pompage de matière (220) est fixe par rapport au premier tuyau d'aspiration de matière (210).

7. Pompe à béton selon l'une quelconque des revendications 2 à 6, dans laquelle le premier tuyau de pompage de matière (220) et le second tuyau de pompage de matière (230) sont disposés symétriquement par rapport au premier tuyau d'aspiration de matière (210).

8. Pompe à béton selon la revendication 1, dans laquelle la plaque résistante à l'usure (300) a deux trous d'alimentation, le corps de vanne (200) comporte en outre un second tuyau d'aspiration de matière (230'), une extrémité avant du second tuyau d'aspiration de matière (230') est munie d'une bague de coupe en correspondance avec la plaque résistante à l'usure (300), et une extrémité arrière du second tuyau d'aspiration de matière (23 0') communique avec la sortie (401) de la trémie, et
dans laquelle, dans le premier état, les trous des bagues de coupe du premier tuyau d'aspiration de matière (210) et du premier tuyau de pompage de matière (220) communiquent avec les troues d'alimentation respectivement, et dans le second état, le trou de la bague de coupe du premier tuyau de pompage de matière (220) et un trou de la bague de coupe du second tuyau de pompage de matière (230') communiquent avec les deux trous d'alimentation respectivement.

9. Pompe à béton selon la revendication 8, dans laquelle le premier tuyau d'aspiration de matière (210), le premier tuyau de pompage de matière (220) et le second tuyau d'aspiration de matière (230') peuvent être actionnés pour osciller de manière synchrone sous l'entraînement du mécanisme d'entraînement (500).

10. Pompe à béton selon la revendication 8, dans laquelle l'extrémité arrière du premier tuyau d'aspiration de matière (210) et l'extrémité arrière du second tuyau d'aspiration de matière (230') convergent pour former un passage d'aspiration de matière qui est relié à la sortie (401) de la trémie (400).

11. Pompe à béton selon la revendication 10, dans laquelle le corps de vanne (200) comporte en outre un joint articulé, le joint articulé a une extrémité reliée de manière rotative à une extrémité arrière du d'aspiration de matière.

12. Véhicule à pompe à béton comportant un châssis, un système de flèche, **caractérisé en ce que** le véhicule à pompe à béton comporte en outre la pompe à béton selon l'une quelconque des revendications 1 à 11, la pompe à béton est montée sur le châssis, et le tuyau d'alimentation communique avec un tuyau d'alimentation du système de fléche.

13. Procédé de commande de la pompe à béton selon l'une quelconque des revendications 2 à 7, comportant deux cylindres d'alimentation et la vanne de distribution, les deux cylindres d'alimentation étant respectivement désignés premier cylindre d'alimentation et second cylindre d'alimentation, **caractérisé en ce que** le procédé comporte les étapes consistant à :
S110, aspirer de la pâte de béton à partir de la trémie (400) à travers le premier tuyau d'aspiration de matière (210) par l'intermédiaire du premier cylindre d'alimentation, et pomper la pâte de béton à travers le second tuyau de pompage de manière (230) par l'intermédiaire du second cylindre d'alimentation,
S120, basculer le corps de vanne de distribution (200) sur l'autre état, et
S130, pomper la pâte de béton à travers le premier tuyau de pompage de manière (200) par l'intermédiaire du premier cylindre d'alimentation, et aspirer la pâte de béton à partir de la trémie (400) à travers le premier tuyau d'aspiration de manière (210) par l'intermédiaire du second cylindre d'alimentation.

14. Procédé de commande de la pompe à béton selon l'une quelconque des revendications 8 à 11 comportant deux cylindres d'alimentation et la vanne de distribution, les deux cylindres d'alimentation étant respectivement désignés premier cylindre d'alimentation et second cylindre d'alimentation, **caractérise en ce que** le procédé comporte les étapes consistant à :
S210, aspirer de la pâte de béton à partir de la trémie (400) à travers le premier tuyau d'aspiration de manière (210) par l'intermédiaire du premier cylindre d'alimentation, et pomper la pâte de béton à travers le premier tuyau de pompage de matiére (220) par l'intermédiaire du second cylindre d'alimentation,
S220, basculer le corps de vanne de distribution (200) sur l'autre état, et
S230, pomper la pâte de béton à travers le premier tuyau de pompage de manière (220) par l'intermédiaire du premier cylindre d'alimentation, et aspirer la pâte de béton à partir de la trémie (400) à travers le second tuyau d'aspiration de matière (230') par l'intermédiaire du second cylindre d'alimentation.
